# EUROPÄISCHE PATENTSCHRIFT

(11) **EP 4 071 309 B1**
(45) Veröffentlichungstag und Bekanntmachung des Hinweises auf die Patenterteilung: **11.06.2025**
(21) Anmeldenummer: 22161115.5
(22) Anmeldetag: 09.03.2022
(51) Int. Cl.: E02F 9/08, E02F 9/20, B60K 11/06, B60K 1/00

(54) **MOBILE ARBEITSMASCHINE, INSBESONDERE RADLADER, MIT EINEM ELEKTRISCHEN ANTRIEBSMOTOR**
MOBILE WORKING MACHINE, IN PARTICULAR WHEEL LOADER, WITH AN ELECTRIC DRIVE MOTOR
MACHINE MOBILE DE TRAVAIL, EN PARTICULIER CHARGEUSE À ROUES, DOTÉE D'UN MOTEUR D'ENTRAINEMENT ÉLECTRIQUE

(30) Priorität: 24.03.2021 DE 102021107409
(43) Veröffentlichungstag der Anmeldung: 12.10.2022
(73) Patentinhaber: Weidemann GmbH, 34497 Korbach (DE)
(72) Erfinder: STEFFEN, Michael, 80796 München (DE); GEIGER, Tom, 34225 Baunatal Rengershausen (DE)
(74) Vertreter: RavensPAT Patentanwälte Partnerschaft mbB

(56) Entgegenhaltungen:
- WO-A1-2020/059164
- WO-A1-2021/192165
- US-A1- 2013 075 171
- US-A1- 2018 029 463
- US-B2- 7 451 843

## Beschreibung

Die Erfindung betrifft eine mobile Arbeitsmaschine, insbesondere Radlader, Teleskoplader, Bagger, Traktor oder dergleichen, mit einem Fahrzeugrahmen und mit einer Antriebseinheit zum Antreiben wenigstens eines Antriebslaufrades oder einer Antriebskette, wobei die Antriebseinheit zumindest einen Elektromotor und wenigstens einen elektrischen Energiespeicher zum Speichern elektrischer Energie für den Elektromotor umfasst, gemäß dem Oberbegriff des Anspruchs 1.

### Stand der Technik

Mobile Arbeitsmaschine, insbesondere Radlader, Teleskoplader, Bagger, Traktor oder dergleichen, mit einem Fahrzeugrahmen und mit einer Antriebseinheit zum Antreiben wenigstens eines Antriebselementes wie eines Laufrades oder Laufkette, werden heutzutage meist mit einem nachfüllbaren Kraftstoff betrieben. Dabei kommen heute hauptsächlich dieselgetriebene Fahrzeuge zum Einsatz. Zwischenzeitlich sind bereits auch elektrisch angetriebene Maschinen im Einsatz.

Außer bei z.B. Radladern mit großen Schaufeln am Hubarm weisen moderne, mobile Arbeitsmaschinen vielfach lösbar verbindbare Arbeitswerkzeuge auf, z.B. die mittels sog. "Schnellwechslern" bzw. "Wechselplatten" gehalten bzw. gelöst werden. Hierbei existieren neben "passiven" Arbeitswerkzeugen wie Schaufel, Ballen-Gabel oder dergleichen auch Arbeitswerkzeuge wie ein Kehrbesen, Mulcher, Greifarme, Greifschaufel, Hebegabeln oder dergleichen, die entsprechend ein "aktives" bzw. mit Energie antreibbares Werkzeug aufweisen.

Beim Betrieb von mobilen Arbeitsmaschinen, insbesondere Radlader, Teleskoplader, Bagger, Traktor oder dergleichen, mit hoher Leistungsanforderung und mit Energieversorgung durch einen Energiespeicher kann es zu einer Erwärmung des Energiespeichers und dabei zu möglichen Überschreitungen der maximal zulässigen Betriebstemperatur des Energiespeichers kommen. Beispielsweise kann durch hohe Leistungsaufnahme und -abgabe eine Eigenerwärmung des Energiespeichers erfolgen. Weiterhin kann der Energiespeicher durch eine Erwärmung der Umgebung, beispielsweise durch eine Arbeitswärme des mechanischen Systems, zusätzlich erwärmt werden.

Die Erwärmung des Energiespeichers kann verschiedene nachteilige Folgen haben. So kann durch die Erwärmung ein Wirkungsgrad des Energiespeichers bei der Abgabe und Aufnahme von Leistung sinken. Auch kann der Energiespeicher durch die hohe Betriebstemperatur bleibend geschädigt werden. Zudem ist es möglich, dass der Energiespeicher bei einem Überschreiten der Maximaltemperatur zerstört und damit unbrauchbar wird.

Ferner kann bei einem Überschreiten der maximal zulässigen Betriebstemperatur des Energiespeichers auch ein Bediener bzw. Fahrer der mobilen Arbeitsmaschine geschädigt werden. Mögliche Gefährdungen können durch eine Brand- oder Explosionsgefahr des überhitzten Energiespeichers gegeben sein. Auch eine Verätzungs- und/oder Vergiftungsgefahr kann durch hierbei generierte, austretende Gase oder durch bei Kontakt mit Chemikalien eines beschädigten Energiespeichers bestehen.

Weiterhin nachteilig sind die hohen Kosten, die durch eine Beeinträchtigung oder Schädigung des Energiespeichers bei dessen Ersatz zu berücksichtigen sind.

Auch deshalb werden moderne, elektrische Energiespeicher wie z.B. Lithium-Ionen-Akkumulatoren oder dergleichen mit einer finanziell und konstruktiv aufwändigen, elektronischen Steuereinheit bzw. Überwachung ausgestattet. Hiermit sollen möglichst optimale Lade- und Entladezyklen umgesetzt und/oder die Beeinträchtigung des elektrischen Energiespeichers möglichst vermieden oder zumindest minimiert werden.

Aus der Druckschrift US 2013/0075 171 A1 ist eine Arbeitsmaschine bekannt, wobei ein Kühlluftstrom von der "Batterie" über ein Rohr von einem Lüfter angesaugt und in den Motorraum bzw. zu einem Inverter und schließlich zum Elektroantriebsmotor strömt. Durch eine Öffnung wird aus dem Motorraum mittels eines zweiten, größeren Lüfters die warme Abluft ausgeblasen. Nachteilig bei diesem Stand der Technik sind die zwei benötigten Lüfter sowie das komplexe Kühlluftsystem, wobei lediglich ein vergleichsweise kleines Rohr zwischen Energiespeicher und Motorraum vorhanden ist und die Luftströmung begrenzt. Darüber hinaus ist eine freie Luftströmung innerhalb des Systems bzw. Motorraumes vorhanden.

### Aufgabe und Vorteile der Erfindung

Aufgabe der Erfindung ist es demgegenüber, eine mobile Arbeitsmaschine mit einer elektrischen Antriebseinheit, die einen Elektromotor und wenigstens einen elektrischen Energiespeicher zum Speichern elektrischer Energie für den Elektromotor umfasst, vorzuschlagen, die die Kühlung deutlich verbessert.

Diese Aufgabe wird, ausgehend von einer mobilen Arbeitsmaschine der einleitend genannten Art, durch die Merkmale des Anspruchs 1 gelöst. Durch die in den Unteransprüchen genannten Maßnahmen sind vorteilhafte Ausführungen und Weiterbildungen der Erfindung möglich.

Dementsprechend zeichnet sich eine erfindungsgemäße Arbeitsmaschine dadurch aus, dass am Elektromotor wenigstens eine Kühlhaube angeordnet ist, so dass der Kühlluftstrom zwischen der Kühlhaube und dem Elektromotor angeordnet ist, wobei die Kühlhaube den Elektromotor abdeckt und den Kühlluftstrom im Zwischenraum zwischen Kühlhaube und Elektromotor leitet/führt, wobei der Kanalabschnitt und/oder das Kühlluftrohr die Kühlhaube ausbildet.

Mit Hilfe einer derartigen Luftfördervorrichtung wird erreicht, dass vor allem der elektrische Energiespeicher möglichst optimal gekühlt wird. Beispielsweise ist eine elektrische und/oder elektronische Luftförder-Kontrolleinheit vorgesehen, womit der Betrieb der Luftfördervorrichtung bzw. der Kühlluftstrom in vorteilhafter Weise kontrolliert bzw. eingestellt werden kann.

Die erfindungsgemäße Arbeitsmaschine kann den elektrischen Energiespeicher zum Speichern von elektrischer Antriebsenergie aufweisen, wobei die elektrische Energie einerseits zur Speisung des Antriebs bzw. der Antriebselemente wie Laufräder oder Laufketten, und andererseits zur Speisung weiterer einer elektrischer und/oder elektronischer Komponenten wie Hilfsaggregate, Lichtanlage, Arbeitswerkzeug und/oder Steuerung der erfindungsgemäße Arbeitsmaschine und/oder zu einem beliebigen anderen Zweck bereitgestellt werden.

Der Energiespeicher kann eine elektrische, wieder aufladbare Batterie, wie beispielsweise einen Akkumulator mit elektrochemischen Zellen aufweisen. Möglich ist beispielsweise die Verwendung eines Lithium-Ionen-Akkus (Typ Li-Ion). Die Auswahl des elektrischen Energiespeichers bzw. Akkus kann im Hinblick auf eine Energiedichte, d.h. auf die speicherbare Energie in Bezug auf das Gewicht, getroffen werden. Ferner kann die vom Typ des Akkus abhängige Wärmeentwicklung beim Aufladen und Entladen des Akkus berücksichtigt werden.

Die erfindungsgemäße Luftfördervorrichtung kann beispielsweise einen Lüfter mit einem Gebläse aufweisen, welcher durch Drehen eines Lüfterrades bzw. Propellers in vorteilhafter Weise Luft aus der Atmosphäre bzw. der Umgebung der erfindungsgemäßen Arbeitsmaschinen ansaugt. Weiterhin kann die Luftfördervorrichtung auch eine mit Luft befüllbare Luftvorratskammer bzw. einen Luftspeicherraum aufweisen, insb. einen Druckluftspeicher wie eine Druckgasflasche oder dergleichen. Gegebenenfalls kann ein mit Druck beaufschlagter Stickstoffspeicher bzw. Stickstoff-Gasflasche vorgesehen werden, die zur Kühlung und/oder vor allem zur Brandbekämpfung im Brandfall z.B. des elektrischen Energiespeichers verwendbar ist.

Die Kühlluftleitvorrichtung kann einstückig gestaltet sein oder aus mehreren, beispielsweise parallel und/oder sequentiell angeordneten Segmenten bzw. Abschnitten bestehen. Die Kühlluftleitvorrichtung oder einzelne ihrer Segmente können baulich in andere Komponenten der erfindungsgemäßen Arbeitsmaschine, beispielsweise in ein Gehäuse bzw. die Karosserie oder den Fahrzeugrahmen, integriert werden.

In einer vorteilhaften Variante der Erfindung ist die Kühlluftleitvorrichtung derart ausgebildet, dass einer Schädigung bzw. Beeinträchtigung durch Erschütterungen und Vibrationen in einem Arbeitsbetrieb vorgebeugt wird. Möglich ist die Gestaltung der Kühlluftleitvorrichtung oder einzelner Segmente als bewegliche und/oder dehnbare Komponenten, beispielsweise mit ineinander gefalteten Wänden nach Art eines Faltenbalgs oder dergleichen.

Vorzugsweise wird mittels der Kühlluftleitvorrichtung der Kühlluftstrom entlang dem elektrischen Energiespeicher geführt. Beispielsweise kann der Kühlluftstrom entlang einer Oberfläche des Energiespeichers geführt werden. Dies kann zum Beispiel dadurch erreicht werden, dass der Kühlluftstrom ein Akkugehäuse, in dem der Energiespeicher angeordnet ist, frei durchströmt.

Generell kann durch den erfindungsgemäßen Kühlluftstrom dem Energiespeicher eine Betriebswärme und/oder Eigenwärme entzogen werden, wodurch dieser gekühlt wird. Die Betriebstemperatur des Energiespeichers kann dadurch gesenkt und im Rahmen einer zugelassenen Betriebstemperatur gehalten werden.

In einer bevorzugten Ausführungsform der Erfindung führt die Kühlluftleitvorrichtung den Kühlluftstrom in vorteilhafter Weise zum und/oder entlang dem Antrieb. Hierdurch kann auch dem Antrieb eine Betriebs- bzw. Eigenwärme entzogen und der Antrieb gekühlt werden. Der Antrieb kann hierbei in vorteilhafter Weise durch denselben Kühlluftstrom wie der des Energiespeichers gekühlt werden. Es ist daher möglich, eine Kühlung des Energiespeichers und des Antriebs bzw. Elektromotors mit nur einem gemeinsamen Luftstrom zu verwirklichen.

So ist es auch möglich, eine Kühlung zumindest dieser beider Komponenten, d.h. Energiespeicher und Antriebsmotor, mit nur einer den Kühlluftstrom erzeugen den Luftfördervorrichtung zu realisieren. Dies ermöglicht eine kostengünstige Gestaltung der Kühlluftstromführung gemäß der Erfindung mit geringen Anforderungen an einen benötigten Bauraum.

Beispielsweise kann der Energiespeicher in einer räumlichen Nähe des Antriebs angeordnet werden, so dass eine gemeinsame Kühlung zumindest dieser beiden Komponenten mit einem einzigen Kühlluftstrom ohne großen Aufwand realisiert werden kann. So ist es beispielsweise denkbar, den Antriebsmotor und den Energiespeicher in einen gemeinsamen Gehäuse bzw. Gehäuseteil anzuordnen, so dass der Luftstrom in vorteilhafter Weise innerhalb dieses Gehäuses/-teils strömen kann. Bei einer solchen Anordnung kann unter anderem durch die erfindungsgemäße Richtung des Kühlluftstroms vom Energiespeicher zum Antrieb weitgehend verhindert werden, dass eine Betriebswärme des Antriebs den Energiespeicher erwärmt.

Alternativ oder in Kombination hierzu ist es auch möglich, den Energiespeicher und den Antrieb bzw. Antriebsmotor mit größerer räumlicher Entfernung, beispielsweise an entfernten Positionen innerhalb des Fahrzeugrahmens anzuordnen. Der Kühlluftstrom gemäß der Erfindung kann dann beispielsweise durch ein Verbindungselement wie den Kanal oder ein Rohr-/Schlauchstück vom Energiespeicher zum Antriebsmotor geführt werden. Hierdurch kann einerseits der Energiespeicher mit frischer bzw. relativ kühler Umgebungsluft effektiv gekühlt werden, ohne durch den Antrieb zusätzlich erwärmt zu werden, und andererseits eine ausreichende Kühlung des Antriebs mit demselben Kühlluftstrom erreicht werden.

Vorteilhafterweise ist die Kühlluftleitvorrichtung zum Leiten/Führen des Kühlluftstromes vom Energiespeicher zu der Kontrolleinheit und von der Kontrolleinheit zu dem Elektromotor und/oder einer weiteren elektrischen Komponente, insbesondere Umrichter, Wechselrichter, Zusatz-Elektromotor, elektrisch angetriebene Hydraulik-Pumpe, Arbeits-Elektromotor des Arbeitswerkzeuges oder dergleichen, ausgebildet. Hiermit wird erreicht, dass auch weitere Komponenten der mobilen Arbeitsmaschine in vorteilhafter Weise gekühlt werden können, insb. mit der erfindungsgemäßen Luftfördervorrichtung.

Vorzugsweise weist wenigstens eine Karosserie und/oder eine Außenhülle der Arbeitsmaschine wenigstens zwei Einströmöffnungen der Kühlluftleitvorrichtung zum Einströmen von Kühlluft für den Kühlluftstrom auf. Hiermit wird einerseits eine definierte Einströmung bzw. Einsaugung und andererseits eine vorteilhafte Strömung, insb. eine Erhöhung der Einströmgeschwindigkeit, durch reduzierter bzw. vorgegebener Einsaug-/Einström-Querschnittsfläche verwirklicht. Dies verbessert die Kühlung bzw. den Abtransport der Wärmeenergie vom/am Energiespeicher.

In einer vorteilhaften Variante der Erfindung umfasst die Kühlluftleitvorrichtung wenigstens einen Kühlluftteiler zum Aufteilen des Kühlluftstromes in zwei Teilluftströme. So kann der Kühlluftstrom in vorteilhafter Weise geteilt und zumindest teilweise parallel durch die mobile Arbeitsmaschine bzw. innerhalb der Karosserie geführt werden. Der Kühlluftstrom kann so auf mehrere, parallel zu kühlende wärmeerzeugende Komponenten aufgeteilt werden.

Weiterhin ist es in vorteilhafter Weise hiermit möglich, den diversen wärmeerzeugenden Komponenten je nach Kühlungsbedarf einen stärkeren oder weniger starken Kühlluftstrom zur Verfügung zu stellen. Beispielsweise kann in einem ersten Teilstück der Energiespeicher mit dem vollen Kühlluftstrom gekühlt werden, der Kühlluftstrom in einem weiteren Teilstück jedoch verzweigt bzw. aufgeteilt werden, so dass ggf. kleinere Komponenten mit einem kleineren Teilstrom gekühlt werden und/oder dass der Elektromotor mit einem stärkeren/größeren Teilkühlluftstrom oder nach der Kühlung von diversen kleineren Komponenten, wie z.B. der Kontrolleinheit oder dergleichen, wieder mit einem zusammengeführten bzw. vereinigten, gesamten Kühlluftstrom gekühlt wird.

Auch kann der Kühlluftstrom des Energiespeichers und zumindest ein weiterer Kühlluftstrom von Anfang an separat ausgebildet und entsprechend der jeweiligen Komponente zugeführt werden. Beispielsweise kann Luft für den Kühlluftstrom und den weiteren Kühlluftströmen mittels mehreren Einström- bzw. Ansaugöffnungen angesaugt und zu mehreren wärmeerzeugenden Komponenten separat geführt werden. Dies ermöglicht beispielsweise eine besonders effektive Kühlung mit jeweils frischer Umgebungsluft und eine Gestaltung von mehreren kurzen Kühlluftströmen innerhalb der mobilen Arbeitsmaschine.

In einer vorteilhaften Ausführungsform kann der zweite/weitere bzw. zusätzliche Kühlluftstrom durch die Luftfördervorrichtung und/oder durch eine zweite/weitere Luftfördervorrichtung erzeugt werden. So können die separaten Kühlluftströme auch einzeln bzw. optimal geleitet und gesteuert werden.

Beispielsweise ist zudem am Energiespeicher und/oder an der Kontrolleinheit die Kühlhaube angeordnet, so dass der Kühlluftstrom und/oder einer der beiden Teilluftströme zudem zwischen der Kühlhaube und dem Energiespeicher und/oder der Kontrolleinheit angeordnet ist. Die Kühlhaube kann in vorteilhafter Weise die jeweilige Komponente abdecken und den Kühlluftstrom im Zwischenraum zwischen Kühlhaube und der jeweiligen Komponente leiten/führen. Hierbei bildet die Kühlhaube in vorteilhafter Weise z.B. den o.g. Kanal aus. Dies verbessert zusätzlich die Kühlung des Energiespeichers und/oder der weiteren Komponenten.

Vorzugsweise ist wenigstens ein Temperatursensor zum Erfassen wenigstens einer Betriebstemperatur, insbesondere des Energiespeichers, Elektromotors und/oder der Kontrolleinheit, vorgesehen. Hiermit kann in vorteilhafter Weise die jeweilige Betriebstemperatur der jeweiligen Komponente ermittelt werden, um insb. eine Überschreitung einer Grenztemperatur bzw. maximal zulässigen Betriebstemperatur erfassen/erkennen zu können.

Vorteilhafterweise ist wenigstens eine Luftförder-Kontrolleinheit zum Kontrollieren der Luftfördervorrichtung in Abhängigkeit der Betriebstemperatur vorgesehen. So kann in vorteilhafter Weise die Luftfördervorrichtung und/oder die weitere Luftfördervorrichtung abhängig von der Betriebstemperatur einer der wärmeerzeugenden Komponenten, d.h. des Energiespeichers, des Antriebsmotors, der Steuerung oder dergleichen gesteuert werden. Beispielsweise kann eine Betriebstemperatur der jeweiligen Komponente erfasst und der Betrieb der Luftfördervorrichtung abhängig vom Überschreiten einer vorgegebenen Temperaturschwelle veranlasst werden. Vorzugsweise wird eine Regelung/Anpassung der Drehzahl der Luftfördervorrichtung verwirklicht.

In einer besonderen Weiterbildung der Erfindung ist wenigstens eine Wärmeschutzvorrichtung zum Schutz des Energiespeichers und/oder des Elektromotors und/oder der Kontrolleinheit vor (äußerer) Wärme vorgesehen. Mit Hilfe dieser Wärmeschutzvorrichtung bzw. Dämmungsvorrichtung kann eine Übertragung der Arbeitswärme des Elektromotors und/oder der Kontrolleinheit etc. hin zum Energiespeicher verhindert oder zumindest vermindert werden. Im Zusammenwirken mit dem Kühlluftstrom kann hierdurch eine noch effektivere Kühlung des Energiespeichers erreicht werden.

Vorteilhafterweise ist die Wärmeschutzvorrichtung als Trenneinheit ausgebildet und zumindest zwischen dem Energiespeicher und/oder dem Elektromotors und/oder der Kontrolleinheit und/oder der weiteren elektrischen Komponente angeordnet. Beispielsweise umfasst Wärmeschutzvorrichtung einen mit Luft gefüllten Zwischenraum zwischen dem Energiespeicher und den übrigen wärmeerzeugenden Komponenten, wobei die Luft des Zwischenraumes nicht Bestandteil des Kühlluftstromes gemäß der Erfindung ist. Der mit Luft gefüllte Zwischenraum kann beispielsweise durch eine entfernte, räumlich getrennte Anordnung des Energiespeichers von den übrigen wärmeerzeugenden Komponenten erreicht werden. Durch die entfernte Anordnung kann Luft zwischen dem Energiespeicher und den übrigen wärmeerzeugenden Komponenten zirkulieren und eine Wärmeübertragung dämmen. Alternativ oder in Kombination hierzu zusätzlich kann die Wärmeschutzvorrichtung vorteilhafte Dämmmaterialien, wie beispielsweise mineralische oder organische Fasern oder Schäume, und/oder Reflexionsflächen etc. aufweisen.

Es ist denkbar, dass in vorteilhafter Weise der Elektromotor der Antriebseinheit als Antrieb der Luftfördervorrichtung ausgebildet ist. So können eine Welle der Luftfördervorrichtung und eine einer Motorwelle des Antriebsmotors bzw. des Elektromotors einstückig ausgebildet werden oder mehrteilig/zweiteilig ausgebildet und hierbei noch gekoppelt werden. Beispielsweise ist es möglich, z.B. ein Propeller bzw. Lüfterrad der Luftfördervorrichtung an oder auf der Motorwelle des Antriebsmotors anzuordnen. Ein separater Antrieb der Luftfördervorrichtung wird bei einer solchen Anordnung nicht benötigt, so dass der konstruktive Aufwand minimierbar ist.

Generell können als wesentliche Vorteile der mobilen Arbeitsmaschine gemäß der Erfindung hervorgehoben werden:
- Der Kühlluftstrom wird entlang mehrerer Komponenten geführt und damit optimal genutzt, d.h. Mehrfachnutzung des Kühlluftstromes,
- der anfangs besonders kalte Kühlluftstrom kühlt erst die besonders temperatursensiblen Bauteile, d.h. vor allem die Li-Ionen-Batterie, und dann die weniger kritischen Komponenten wie z.B. einen Umrichter, den Antriebsmotor etc.,
- es ist nur ein einziger Lüfter notwendig, um den Luftstrom zu erzeugen,
- die Kanalisierung des Luftstromes innerhalb des Fahrzeuges verbessert die Kühlwirkung,
- die Luftkühlung gemäß der Erfindung ist kostengünstig, aber trotzdem leistungsfähig,
- eine Wasserkühlung wäre wesentlich teurer und aufwändiger.

### Ausführungsbeispiel

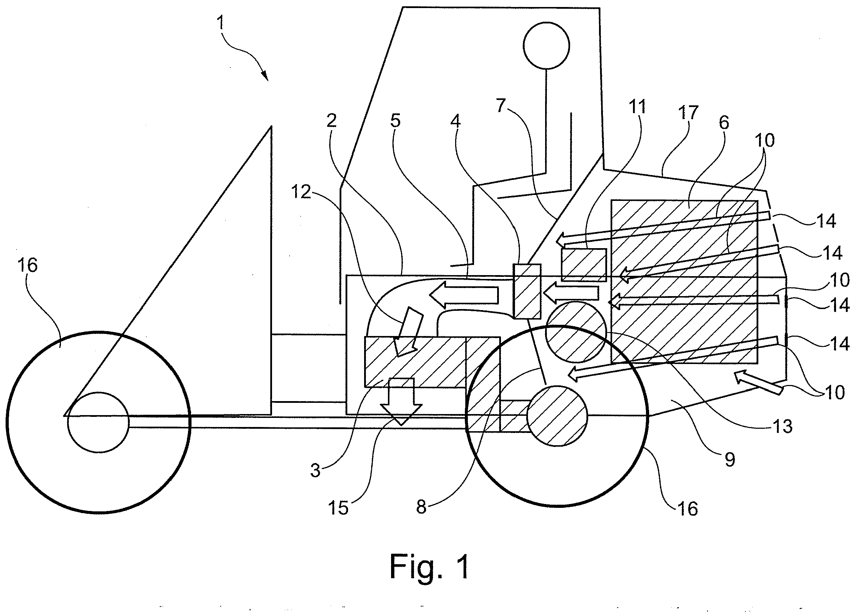

Ein Ausführungsbeispiel der Erfindung ist in der Zeichnung dargestellt und wird anhand der einzigen Figur nachfolgend näher erläutert. So zeigt Figur 1 einen schematischen Aufbau einer mobilen Arbeitsmaschine gemäß der Erfindung.

In Figur 1 ist schematisch ein Radlader 1 als mobile Arbeitsmaschine gemäß der Erfindung dargestellt, wobei lediglich aus Gründen der Übersichtlichkeit ein Hubarm mit Arbeitswerkzeug bzw. Schaufel nicht näher dargestellt ist. Zum Antreiben von Laufrädern 16 weist der Radlader 1 in einer vorteilhaften Rahmenstruktur 2 eines Fahrzeugrahmens einen Antriebsmotor 3 als Elektromotor 3 auf. Der Elektromotor 3 wird mit elektrischer, gespeicherter Energie aus einem elektrischen Energiespeicher 6 bzw. Akku 6 versorgt, um den Radlader 1 bzw. die Laufräder 16 anzutreiben. Optional kann ein vorteilhaftes Übersetzungsgetriebe und/oder Schaltgetriebe und/oder Differenzialgetriebe zum Antrieb mehrerer/aller Laufräder 16 vorgesehen werden.

Ein Lüfter 4 ist zwischen dem Elektromotor 3 und dem elektrischen Energiespeicher 6 bzw. Akku 6 angeordnet, um über Einströmöffnungen 14 einer Karosserie 17 Umgebungsluft einzusaugen, so dass der Akku 6 von einem vorteilhaften Kühlluftstrom 10 umströmt und gekühlt wird. Zudem drückt der Lüfter 4 den Kühlluftstrom 12 zum Elektromotor 3, so dass dieser mit etwas weniger kühler Luft gekühlt wird. Der Antriebsmotor 3 bzw. Elektromotor 3 verträgt einerseits etwas höhere Betriebstemperaturen als der Akku 6 und andererseits wird der Antriebsmotor 3 aufgrund seiner vorteilhaften Positionierung im Fahrzeugrahmen bzw. am Boden der Karosserie 17 in gewisser Weise zusätzlich von unter dem Radlader 1 vorbeiströmender Umgebungsluft gekühlt. Ein Luftauslass 15 ermöglicht das Ausströmen des erwärmten Luftstromes 12 auf der Unterseite der Karosserie 17.

Teilweise erfüllt die Karosserie 17 auch die Funktion einer Kühlluftleitvorrichtung wie z.B. unterhalb des Akkus 6 wird hiermit ein Kanal 9 ausgebildet und/oder oberhalb (und ggf. seitlich) des Akkus 6 im schematisch dargestellten Ausführungsbeispiel kann ebenfalls der Luftstrom 10 in vorteilhafter Weise geleitet bzw. kanalisiert werden.

Allerdings können auch spezielle Luftleitelemente vorgesehen werden wie z.B. eine Wand 7 und/oder Trennwand 8, die den Luftstrom 10 nach bzw. "hinter" dem Akku 6 zum Lüfter 4 leiten/fokussieren, und wie eine Haube 5 bzw. Kühlgehäuse 5, die/das unmittelbar am Lüfter 4 angeordnet ist und zumindest in einem ersten Abschnitt kanalartig bzw. rohrförmig und/oder vollumfänglich geschlossen ausgebildet ist und sich dann in gewisser Weise über den Elektromotor 3 haubenartig überstülpt. Diese Haube 5 leitet in vorteilhafter Weise den Kühlluftstrom 12 zum Elektromotor 3 und kann im Vergleich zur Strömungsgeschwindigkeit des angesaugten Luftstromes 10 eine gewisse Erhöhung der Strömungsgeschwindigkeit des Luftstromes 12 verwirklichen. Hierdurch kann in vorteilhafter Weise auch bei bereits etwas durch die Abwärme des Akkus 6 erwärmtem Kühlluftstrom 12 genügend Wärmeenergie vom Elektromotor 3 abgeführt werden.

Die Trennwand 8 ist zudem auch als Wärmeschutzwand 8 ausgebildet, wobei diese ggf. eine Reflexionsschicht/-beschichtung aufweist, um beispielsweise die Abstrahlung von Abwärme des Elektromotors 3 in Richtung Akku 6 zu verhindern oder zumindest deutlich zu reduzieren.

Darüber hinaus können noch weitere Komponenten bzw. sog. Nebenaggregate des Radladers 1 mittels des Lüfters 4 bzw. den Kühlluftströmen 10, 12 gekühlt werden. So kann z.B. eine elektrische Steuerung 11 und/oder ein Nebenaggregat 13 bzw. ein als Hydraulikpumpenmotor ausgebildeter Elektromotor 13 ebenfalls mit dem/den Luftströmen 10, 12 gekühlt werden. Gemäß der Erfindung sollte jedoch der Energiespeicher 6 bzw. Akku 6 als erste Baueinheit mittels Umgebungsluft angeströmt bzw. gekühlt werden, um eine möglichst optimale Kühlung dieses besonders beanspruchten und temperatursensiblen Akkus 6 zu gewährleisten.

### Bezugszeichenliste

- 1: Radlader
- 2: Rahmenstruktur
- 3: Antriebsmotor
- 4: Lüfter
- 5: Haube/Kühlgehäuse
- 6: Energiespeicher/Akku
- 7: Wand
- 8: Trennwand
- 9: Kanal
- 10: Kühlluftstrom
- 11: Steuerung
- 12: Kühlluftstrom
- 13: Nebenaggregat/Elektromotor
- 14: Einströmöffnungen
- 15: Luftauslass
- 16: Laufrad
- 17: Karosserie

## Patentansprüche

1. Mobile Arbeitsmaschine (1), insbesondere Radlader (1), Teleskoplader, Bagger, Traktor oder dergleichen, mit einem Fahrzeugrahmen und mit einer Antriebseinheit zum Antreiben wenigstens eines Antriebslaufrades oder einer Antriebskette, wobei die Antriebseinheit zumindest einen Elektromotor (3) und wenigstens einen elektrischen Energiespeicher (6) zum Speichern elektrischer Energie für den Elektromotor (3) umfasst, wobei wenigstens eine Kontrolleinheit (11) zur elektrischen und/oder elektronischen Kontrolle des Elektromotors (3) und/oder des Energiespeichers (6) vorgesehen ist, wobei wenigstens eine Werkzeughaltevorrichtung zum Halten eines Arbeitswerkzeugs vorgesehen ist, wobei insbesondere die Werkzeughaltevorrichtung wenigstens eine um eine Schwenkachse verschwenkbare Tragvorrichtung, z.B. Hubarm und/oder Teleskopausleger und/oder Dreipunkt-Hebevorrichtung, umfasst, wobei wenigstens eine Luftfördervorrichtung (4), insbesondere Lüfter (4) oder Gebläse, zum Erzeugen eines Kühlluftstromes (10, 12) vorgesehen ist und dass wenigstens eine Kühlluftleitvorrichtung (5, 7, 8, 9, 14, 17) zum Leiten/Führen des Kühlluftstromes (10, 12) vom Energiespeicher (6) zumindest zu dem Elektromotor (3) und/oder zu der Kontrolleinheit (11) vorgesehen ist, wobei die Luftfördervorrichtung (4) zwischen dem Energiespeicher (6) und dem Elektromotor (3) angeordnet ist, wobei die Kühlluftleitvorrichtung (5, 7, 8, 9, 14, 17) wenigstens einen Kanalabschnitt (5) und/oder ein Kühlluftrohr (5) für ein Durchströmen des Kühlluftstroms (10, 12) umfasst, wobei der Kanalabschnitt (5) und/oder das Kühlluftrohr (5) quer zur Strömungsrichtung des Kühlluftstromes eine Kanal-/ Rohrwand aufweist,
**dadurch gekennzeichnet,**
**dass** am Elektromotor (3) wenigstens eine Kühlhaube (5) angeordnet ist, so dass der Kühlluftstrom (10, 12) zwischen der Kühlhaube (5) und dem Elektromotor (3) angeordnet ist, wobei die Kühlhaube (5) den Elektromotor (3) abdeckt und den Kühlluftstrom (10, 12) im Zwischenraum zwischen Kühlhaube (5) und Elektromotor (3) leitet/führt, wobei der Kanalabschnitt (5) und/oder das Kühlluftrohr (5) die Kühlhaube (5) ausbildet.

2. Arbeitsmaschine nach Anspruch 1, **dadurch gekennzeichnet, dass** die Kühlluftleitvorrichtung (5, 7, 8, 9, 14, 17) zum Leiten/Führen des Kühlluftstromes (10, 12) vom Energiespeicher (6) zu der Kontrolleinheit (11) und von der Kontrolleinheit (11) zu dem Elektromotor (3) und/oder einer weiteren elektrischen Komponente (13), insbesondere Umrichter, Wechselrichter, Zusatz-Elektromotor (13), elektrisch angetriebene Hydraulik-Pumpe, Arbeits-Elektromotor des Arbeitswerkzeuges oder dergleichen, ausgebildet ist.

3. Arbeitsmaschine nach einem der vorgenannten Ansprüche, **dadurch gekennzeichnet, dass** wenigstens eine Karosserie (17) und/oder eine Außenhülle der Arbeitsmaschine (1) wenigstens zwei Einströmöffnungen (14) der Kühlluftleitvorrichtung (5, 7, 8, 9, 14, 17) zum Einströmen von Kühlluft für den Kühlluftstrom (10, 12) aufweist.

4. Arbeitsmaschine nach einem der vorgenannten Ansprüche, **dadurch gekennzeichnet, dass** die Kühlluftleitvorrichtung (5, 7, 8, 9, 14, 17) wenigstens einen Kühlluftteiler zum Aufteilen des Kühlluftstromes (10, 12) in zwei Teilluftströme umfasst.

5. Arbeitsmaschine nach Anspruch 4, **dadurch gekennzeichnet, dass** am Energiespeicher (6) und/oder an der Kontrolleinheit (11) wenigstens eine Kühlhaube (5, 17) angeordnet ist, so dass der Kühlluftstrom (10, 12) und/oder einer der beiden Teilluftströme zwischen der Kühlhaube (5) und dem Energiespeicher (6) und/oder dem Elektromotor (3) und/oder der Kontrolleinheit (11) angeordnet ist.

6. Arbeitsmaschine nach einem der vorgenannten Ansprüche, **dadurch gekennzeichnet, dass** wenigstens ein Temperatursensor zum Erfassen wenigstens einer Betriebstemperatur, insbesondere des Energiespeichers (6), Elektromotors (3) und/oder der Kontrolleinheit (11), vorgesehen ist.

7. Arbeitsmaschine nach Anspruch 6, **dadurch gekennzeichnet, dass** wenigstens eine Luftförder-Kontrolleinheit zum Kontrollieren der Luftfördervorrichtung (4) in Abhängigkeit der Betriebstemperatur vorgesehen ist.

8. Arbeitsmaschine nach einem der vorgenannten Ansprüche, **dadurch gekennzeichnet, dass** wenigstens eine Wärmeschutzvorrichtung (8) zum Schutz des Energiespeichers (6) und/oder des Elektromotors (3) und/oder der Kontrolleinheit (11) vor Wärme vorgesehen ist.

9. Arbeitsmaschine nach Anspruch 8, **dadurch gekennzeichnet, dass** die Wärmeschutzvorrichtung (8) als Trenneinheit (8) ausgebildet ist und zumindest zwischen dem Energiespeicher (6) und/oder dem Elektromotor (3) und/oder der Kontrolleinheit (11) und/oder der weiteren elektrischen Komponente (13) angeordnet ist.

10. Arbeitsmaschine nach einem der vorgenannten Ansprüche, **dadurch gekennzeichnet, dass** der Elektromotor (3) der Antriebseinheit als Antrieb der Luftfördervorrichtung (4) ausgebildet ist.

## Claims

1. Mobile working machine (1), in particular wheel loader (1), telescopic loader, excavator, tractor or the like, having a vehicle frame and having a drive unit for driving at least one drive running wheel or a drive chain, wherein the drive unit comprises at least one electric motor (3) and at least one electrical energy store (6) for storing electrical energy for the electric motor (3), wherein at least one control unit (11) is provided for electrically and/or electronically controlling the electric motor (3) and/or the energy store (6), wherein at least one tool holding device is provided for holding a working tool, wherein in particular the tool holding device comprises at least one carrying device pivotable about a pivot axis, for example a lifting arm and/or a telescopic boom and/or a three-point lifting device, wherein at least one air conveying device (4), in particular a fan (4) or blower, is provided for generating a cooling air flow (10, 12), and wherein at least one cooling air guiding device (5, 7, 8, 9, 14, 17) is provided for guiding/leading the cooling air flow (10, 12) from the energy store (6) at least to the electric motor (3) and/or to the control unit (11), wherein the air conveying device (4) is arranged between the energy store (6) and the electric motor (3), wherein the cooling air guiding device (5, 7, 8, 9, 14, 17) comprises at least one duct portion (5) and/or one cooling air pipe (5) for the cooling air flow (10, 12) to flow through, wherein the duct portion (5) and/or the cooling air pipe (5) have/has a duct/pipe wall transverse to the flow direction of the cooling air flow,
**characterized**
**in that** at least one cooling hood (5) is arranged on the electric motor (3), so that the cooling air flow (10, 12) is arranged between the cooling hood (5) and the electric motor (3), wherein the cooling hood (5) covers the electric motor (3) and guides/leads the cooling air flow (10, 12) in the intermediate space between the cooling hood (5) and the electric motor (3), wherein the duct portion (5) and/or the cooling air pipe (5) form/forms the cooling hood (5).

2. Working machine according to Claim 1, **characterized in that** the cooling air guiding device (5, 7, 8, 9, 14, 17) is designed for guiding/leading the cooling air flow (10, 12) from the energy store (6) to the control unit (11) and from the control unit (11) to the electric motor (3) and/or a further electrical component (13), in particular a converter, inverter, additional electric motor (13), electrically driven hydraulic pump, working electric motor of the working tool or the like.

3. Working machine according to either of the preceding claims, **characterized in that** at least a body (17) and/or an outer shell of the working machine (1) have/has at least two inflow openings (14) of the cooling air guiding device (5, 7, 8, 9, 14, 17) for the inflow of cooling air for the cooling air flow (10, 12).

4. Working machine according to any of the preceding claims, **characterized in that** the cooling air guiding device (5, 7, 8, 9, 14, 17) comprises at least one cooling air divider for dividing the cooling air flow (10, 12) into two partial air flows.

5. Working machine according to Claim 4, **characterized in that** at least one cooling hood (5, 17) is arranged on the energy store (6) and/or on the control unit (11), so that the cooling air flow (10, 12) and/or one of the two partial air flows is arranged between the cooling hood (5) and the energy store (6) and/or the electric motor (3) and/or the control unit (11).

6. Working machine according to any of the preceding claims, **characterized in that** at least one temperature sensor is provided for detecting at least one operating temperature, in particular of the energy store (6), the electric motor (3) and/or the control unit (11).

7. Working machine according to Claim 6, **characterized in that** at least one air conveying control unit is provided for controlling the air conveying device (4) depending on the operating temperature.

8. Working machine according to one of the preceding claims, **characterized in that** at least one heat protection device (8) is provided for protecting the energy store (6) and/or the electric motor (3) and/or the control unit (11) from heat.

9. Working machine according to Claim 8, **characterized in that** the heat protection device (8) is designed as a separating unit (8) and is arranged at least between the energy store (6) and/or the electric motor (3) and/or the control unit (11) and/or the further electrical component (13).

10. Working machine according to any of the preceding claims, **characterized in that** the electric motor (3) of the drive unit is designed as a drive of the air conveying device (4).

## Revendications

1. Machine de travail (1) mobile, en particulier chargeuse à roues (1), chariot télescopique, pelleteuse, tracteur ou analogue, présentant un châssis de véhicule et une unité d'entraînement destinée à entraîner au moins une roue d'entraînement ou une chaîne de transmission, l'unité d'entraînement comprenant au moins un moteur électrique (3) et au moins un accumulateur d'énergie (6) électrique destiné à accumuler l'énergie électrique pour le moteur électrique (3), au moins une unité de commande (11) pour la commande électrique et/ou électronique du moteur électrique (3) et/ou de l'accumulateur d'énergie (6) étant prévue, au moins un dispositif de retenue d'outil destiné à tenir un outil de travail étant prévu, en particulier le dispositif de retenue d'outil comprenant au moins un dispositif support pouvant pivoter autour d'un axe de pivotement, par exemple un bras élévateur et/ou une flèche télescopique et/ou un dispositif d'élévation à trois points, au moins un dispositif de transport d'air (4), en particulier un aérateur (4) ou un ventilateur, destiné à générer un flux (10, 12) d'air de refroidissement étant prévu et au moins un dispositif de guidage (5, 7, 8, 9, 14, 17) d'air de refroidissement destiné à guider/diriger le flux (10, 12) d'air de refroidissement depuis l'accumulateur d'énergie (6) au moins vers le moteur électrique (3) et/ou vers l'unité de commande (11) étant prévu, le dispositif de transport (4) d'air étant agencé entre l'accumulateur d'énergie (6) et le moteur électrique (3), le dispositif de guidage (5, 7, 8, 9, 14, 17) d'air de refroidissement comprenant au moins une section (5) de canal et/ou un tuyau (5) à air de refroidissement pour un écoulement du flux (10, 12) d'air de refroidissement, la section (5) de canal et/ou le tuyau (5) à air de refroidissement présentant une paroi de canal et/ou de tuyau transversale à la direction d'écoulement,
**caractérisée**
**en ce qu'**au moins un capot de refroidissement (5) est agencé sur le moteur électrique (3) de telle sorte que le flux (10, 12) d'air de refroidissement est agencé entre le capot de refroidissement (5) et le moteur électrique (3), le capot de refroidissement (5) recouvrant le moteur électrique (3) et guidant/dirigeant le flux (10, 12) d'air de refroidissement dans l'espace intermédiaire entre le capot de refroidissement (5) et le moteur électrique (3), la section (5) de canal et/ou le tuyau (5) à air de refroidissement formant le capot de refroidissement (5).

2. Machine de travail selon la revendication 1, **caractérisée en ce que** le dispositif de guidage (5, 7, 8, 9, 14, 17) d'air de refroidissement est réalisé pour guider/diriger le flux (10, 12) d'air de refroidissement depuis l'accumulateur d'énergie (6) vers l'unité de commande (11) et à partir de l'unité de commande (11) vers le moteur électrique (3) et/ou vers un autre composant électrique (13), en particulier un convertisseur, un onduleur, un moteur électrique supplémentaire (13), une pompe hydraulique à entraînement électrique, un moteur électrique de travail de l'outil de travail ou analogue.

3. Machine de travail selon l'une des revendications susmentionnées, **caractérisée en ce qu'**au moins une carrosserie (17) et/ou une enveloppe externe de la machine de travail (1) présente au moins deux ouvertures d'entrée (14) du dispositif de guidage (5, 7, 8, 9, 14, 17) d'air de refroidissement pour l'entrée d'air de refroidissement pour le flux (10, 12) d'air de refroidissement.

4. Machine de travail selon l'une des revendications susmentionnées, **caractérisée en ce que** le dispositif de guidage (5, 7, 8, 9, 14, 17) d'air de refroidissement comprend au moins un séparateur d'air de refroidissement destiné à séparer le flux (10, 12) d'air de refroidissement en deux flux d'air partiels.

5. Machine de travail selon la revendication 4, **caractérisée en ce qu'**au moins un capot de refroidissement (5, 17) est agencé au niveau de l'accumulateur d'énergie (6) et/ou de l'unité de commande (11) de telle sorte que le flux (10, 12) d'air de refroidissement et/ou l'un des deux flux d'air partiels est/sont agencé(s) entre le capot de refroidissement (5) et l'accumulateur d'énergie (6) et/ou le moteur électrique (3) et/ou l'unité de commande (11).

6. Machine de travail selon l'une des revendications susmentionnées, **caractérisée en ce qu'**au moins un capteur de température destiné à détecter au moins une température de fonctionnement, en particulier de l'accumulateur d'énergie (6), du moteur électrique (3) et/ou de l'unité de commande (11), est prévu.

7. Machine de travail selon la revendication 6, **caractérisée en ce qu'**au moins une unité de commande de transport d'air, destinée à commander le dispositif de transport (4) d'air en fonction de la température de fonctionnement, est prévue.

8. Machine de travail selon l'une des revendications susmentionnées, **caractérisée en ce qu'**au moins un dispositif de protection thermique (8), destiné à protéger l'accumulateur d'énergie (6) et/ou le moteur électrique (3) et/ou l'unité de commande (11) contre la chaleur, est prévu.

9. Machine de travail selon la revendication 8, **caractérisée en ce que** le dispositif de protection thermique (8) est réalisé comme une unité de séparation (8) et est agencé au moins entre l'accumulateur d'énergie (6) et/ou le moteur électrique (3) et/ou l'unité de commande (11) et/ou l'autre composant électrique (13).

10. Machine de travail selon l'une des revendications susmentionnées, **caractérisée en ce que** le moteur électrique (3) de l'unité d'entraînement est réalisée comme entraînement du dispositif de transport (4) d'air.
